# FASCICULE DE BREVET EUROPEEN

(11) **EP 0 609 136 B1**
(45) Date de publication et mention de la délivrance du brevet: **10.09.1997**
(21) Numéro de dépôt: 94400154.4
(22) Date de dépôt: 25.01.1994
(51) Int. Cl.: H01R 13/514

(54) **Connecteur terminal de jarretière**
Endverbinder für Schaltadern
Connector terminal for connecting leads

(30) Priorité: 29.01.1993 FR 9300957
(43) Date de publication de la demande: 03.08.1994
(73) Titulaire: ALCATEL ALSTHOM COMPAGNIE GENERALE D'ELECTRICITE, 75008 Paris (FR)
(72) Inventeur: Audeval, Fabrice, F-08000 Charleville Mézières (FR); Weber, Hervé, F-08000 Charleville Mézières (FR)
(74) Mandataire: Buffiere, Michelle

(56) Documents cités:
- EP-A- 0 506 075
- WO-A-92/04793
- DE-A- 4 111 491
- FR-A- 2 622 058
- US-A- 4 243 288

## Description

La présente invention porte sur un connecteur terminal de jarretière, ou de tout cordon analogue de type bifilaire et à éventuel fil d'écran ou de masse supplémentaire, permettant un raccordement amovible de cette jarretière à une paire de conducteurs ou une paire de bornes d'un circuit, elle-même reliée à un connecteur simple ou multiple équipé de dispositions d'enfichage complémentaires.

Dans la demande de brevet EP-A-593343, déposée au nom de la demanderesse, il est décrit une connexion électrique réalisée par des connecteurs équipés de contacts de type hermaphrodite, en vis-à-vis. Ces contacts sont identiques. Chacun est constitué par une lame simple ou double, qui présente à l'une de ses extrémités un bras élastique, simple ou double, de couplage hermaphrodite, et à celle opposée une fourche autodénudante, le bras élastique double sur la lame alors double étant formé par deux bras individuels côte à côte avec un décalage entre eux égal à l'épaisseur de l'un d'eux.

Le bras élastique et la fourche autodénudante sont accessibles sur le corps isolant du connecteur, pour le raccordement d'un fil isolé dans chaque fourche autodénudante, réalisé à l'aide d'un outil, et pour le couplage de deux contacts en vis-à-vis de deux connecteurs enfichés l'un dans l'autre.

Avantageusement le bras élastique est protégé dans un trou frontal de l'un des deux connecteurs et dans une cheminée, au moins partielle, saillante frontalement sur l'autre connecteur et reçue dans le trou du premier connecteur. Le couplage des deux contacts en vis-à-vis est réalisé par la tranche de leurs bras élastiques et éventuellement par l'une de leurs faces quand ces bras élastiques sont doubles.

La présente invention a pour but d'intégrer l'outil de raccordement des fils de la jarretière dans le connecteur terminal de la jarretière et de pouvoir éventuellement y intégrer en outre des composants de protection contre des surtensions parasites.

Elle porte sur un connecteur de jarretière, comportant un corps isolant et des contacts plats affectés aux fils de la jarretière et retenus dans ledit corps, lesdits contacts ayant une première extrémité accessible frontalement sur ledit corps et étant munis d'une fourche autodénudante sur une deuxième extrémité opposée, de raccordement de l'un des fils sur chacun d'eux, caractérisé en ce que ledit corps est constitué par un boîtier quasi-fermé, formé par un tiroir fermé par un couvercle opposé à un fond, comportant :
- une première paroi frontale, de rétention des contacts parallèlement audit fond et d'accès de la première extrémité de chacun d'eux,
- une portée intérieure, mobile relativement aux deuxièmes extrémités desdits contacts et équipée d'une part de passages individuels parallèles audit fond, de réception des deuxièmes extrémités des contacts, et d'autre part de trous individuels coupant lesdits passages et débouchant sur ledit fond, de réception desdits fils,
- des fentes à travers ledit fond, situées en regard et sensiblement le long des fourches autodénudantes des contacts et ouvertes du côté opposé à ladite première paroi frontale, et
- des moyens d'actionnement de ladite portée, depuis une première position sensiblement en bout des ouvertures desdites fentes et des deuxièmes extrémités des contacts et une deuxième position sur lesdites fentes et les deuxièmes extrémités des contacts.

Le connecteur terminal de jarretière peut en outre présenter au moins l'une des caractéristiques additionnelles suivantes :
- Il comporte trois contacts identiques, montés côte à côte et à proximité dudit fond, pour deux premiers d'entre eux, et monté centré sur lesdits premiers contacts et à proximité dudit couvercle, pour le troisième dit contact de masse.
- Il comporte en outre deux varistances montées dans ledit tiroir et reliées chacune entre l'un des premiers contacts et le contact de masse.
- Ledit tiroir est réalisé en deux parties assemblables l'une à l'autre, dites partie fixe et équipée pour l'une d'elles, à laquelle appartiennent au moins ladite première paroi frontale et une portion attenante dudit fond dit premier demi-fond muni desdites fentes, ouvertes directement sur son bord terminal opposé à ladite première paroi frontale, et partie mobile pour l'autre constituant lesdits moyens d'actionnement et à laquelle appartiennent ladite portée et au moins l'autre portion du fond dite deuxième demi-fond.
- Le tiroir comporte en outre une poignée de préhension sur la deuxième paroi frontale et deux accès de test à travers cette paroi.

Les caractéristiques et avantages de la présente invention ressortiront de la description faite ci-après d'un exemple préféré de réalisation illustré dans les dessins ci-annexés. Dans ces dessins :
- Les figures 1 et 2 sont deux vues en perspective d'un connecteur terminal de jarretière selon l'invention, celui-ci étant retourné sur lui-même de l'une de ces figures à l'autre,
- Les figures 3 et 4 sont deux vues en perspective illustrant recto et verso une première partie dite partie fixe du corps du connecteur,
- Les figures 5 et 6 sont deux vues en perspective illustrant recto et verso une deuxième partie dite partie mobile du corps du connecteur,
- les figures 7 et 8 représentent en perspective et en plan, à échelle différente, l'un quelconque des contacts dudit connecteur.

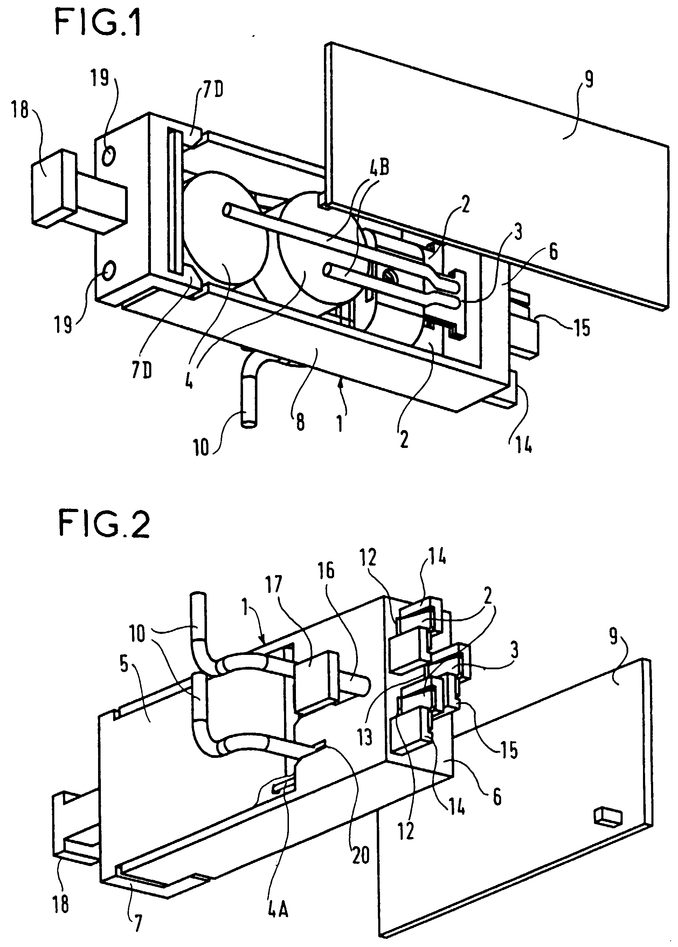

En se référant tout d'abord aux figures 1 et 2, on voit que chaque connecteur de jarretière se présente sous la forme globale d'un petit boîtier isolant, défini essentiellement par un tiroir 1 équipé et fermé.

Ce tiroir est équipé de deux contacts 2 pour la jarretière concernée, d'un contact de masse 3 notamment pour l'éventuel fil d'écran de la jarretière, et de deux éléments 4 de protection contre des surtensions parasites tels que deux varistances.

Le tiroir présente un fond 5, deux petites parois frontales, dites arrière 6 et avant 7, et de deux parois latérales 8. Il est fermé par un couvercle 9 opposé au fond.

Les deux contacts 2 et le contact de masse 3 sont retenus parallèlement au fond 5 dans la paroi arrière 6 du tiroir, les deux contacts 2 étant côte à côte sur une partie importante de la largeur du tiroir et à proximité du fond et le contact 3 dit centré entre les précédents et du côté du couvercle. Leurs extrémités à l'intérieur du tiroir sont très largement saillantes dans celui-ci, jusqu'à une dite zone médiane.

Les deux varistances 4 sont reliées à ces extrémités intérieures des contacts. Elles se présentent sous la forme d'un petit cylindre plat et ont sur leurs faces d'extrémité deux queues à souder, telles que 4A du côté du fond et 4B à l'opposé. Les queues 4A des deux varistances sont soudées sur l'une des parties latérales de l'extrémité intérieure de l'un et l'autre des contacts 2, respectivement. Celles 4B sont soudées sur les deux parties latérales de l'extrémité intérieure du contact de masse 3B. Les varistances 4 sont ainsi maintenues en bout des contacts, en étant l'une à l'avant de l'autre et laissant par ailleurs un espace entre elles et les parois latérales du tiroir. Sur ces extrémités intérieures des deux contacts 2 et du contact 3 sont par ailleurs reliés les deux fils 10 et l'éventuel fil d'écran, non représenté, de la jarretière. Les dispositions prévues sur le tiroir pour ce raccordement sont précisées ultérieurement.

Ces contacts 2 et 3 sont légèrement saillants sur l'extérieur de la paroi arrière, pour leur enfichage sur des contacts accessibles de manière complémentaire d'un autre connecteur. Il leur correspond des passages 12 et 13 à travers la paroi arrière et des cheminées partielles extérieures 14 et 15 sur cette paroi. Ces cheminées assurent la protection de chacun des contacts et sont définies par des pattes sur une partie de la périphérie des bords extérieurs de chacun des passages 12 et 13.

Une patte 16, semi-arrière, est prévue saillante sous le fond, parallèlement aux parois latérales du tiroir. Elle se termine par une butée 17 parallèle au fond. Cette patte 16 et la butée 17 permettent la retenue du connecteur de jarretière dans une position d'attente de connexion sur une barette fendue, par engagement de la patte dans la ou l'une des fentes de cette barrette, et sa mise en position de connexion, par simple engagement à fond de cette patte dans cette fente jusqu'à appui de la butée contre un pied prévu sur la barrette.

Une poignée 18, saillante sur l'extérieur de la paroi avant 7 facilite la préhension du connecteur de jarretière.

Deux accès 19 sont prévus latéralement dans la paroi avant 7, pour des prises de test ou autre insérées à travers eux et venant d'un côté et de l'autre des varistances jusqu'aux extrémités intérieures des deux contacts 2.

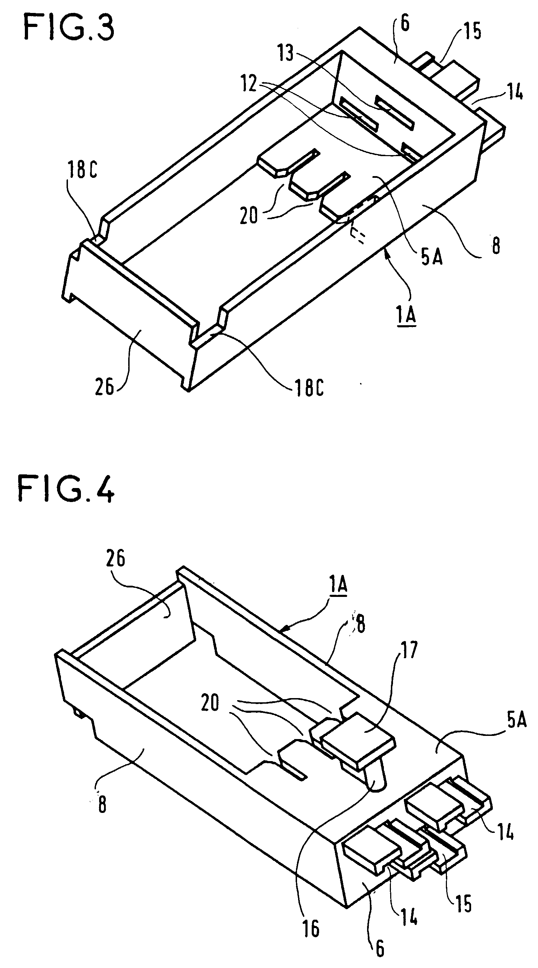

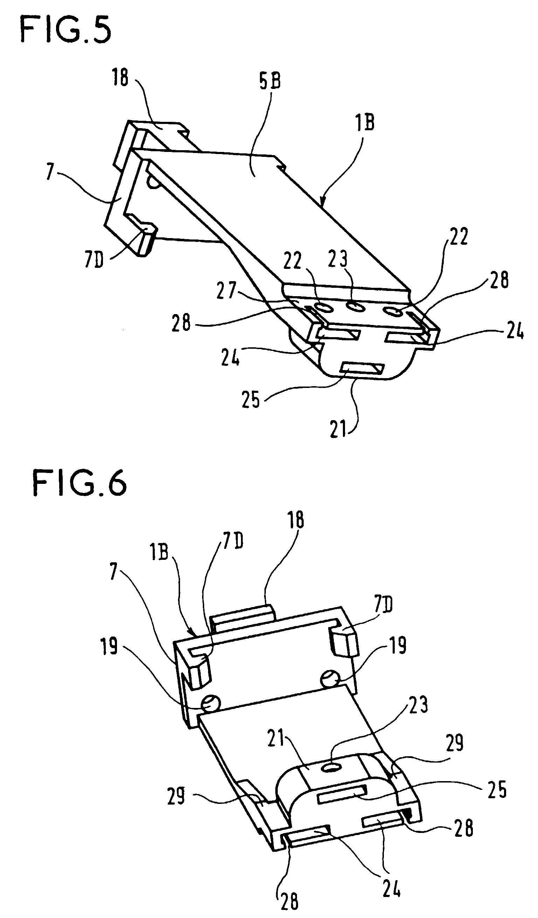

Le raccordement des fils, tels que 10 de la jarretière, est expliqué en regard de ces figures 1 et 2 et des figures 3 à 6. Il leur correspond 3 fentes 20 à travers le fond, dans une zone sensiblement médiane de celui-ci, qui sont situées juste à l'avant de la patte saillante extérieurement 16 et centrées sur les axes des extrémités intérieures des deux contacts 2 et du contact 3. Il leur correspond en outre avantageusement une portée 21, saillante sur le fond dans le tiroir, en bout des contacts 2 et 3 et mobile relativement à ceux-ci pour recevoir leurs extrémités intérieures. Cette portée mobile 21 assure d'une part le rôle d'outil poussoir pour le raccordement des fils de la jarretière sur les extrémités intérieures des contacts et le rôle de support supplémentaire de maintien de ces contacts.

Une réalisation préférentielle du tiroir 1 est décrite en regard des figures supplémentaires 3 à 6.

Le tiroir précité est réalisé en deux parties l'une 1A fixe et l'autre mobile 1B.

A la partie fixe 1A appartiennent la paroi arrière 6, sensiblement le demi-fond attenant 5A, avec les trois fentes 20 débouchant sur son bord opposé à la paroi arrière 6 et la patte 16 et la butée 17 saillantes sous lui, et de préférence les parois latérales 8. Cette partie fixe porte les contacts, avec les varistances qui leur sont soudées. Les parois latérales sont reliées par une entretoise terminale notée 26, opposée à la paroi arrière 6, rigidifiant cette partie fixe 1A.

A la partie mobile 1B appartiennent la paroi avant 7, l'autre demi-fond attenant 5B, avec la portée 21 saillante sur lui et terminale à l'opposé de la paroi avant. On voit en outre que cette portée 21 est percée depuis le fond de deux trous 22 non traversants et d'un trou 23 ici traversant, qui sont transversaux aux contacts de la partie fixe et en regard de leurs axes respectifs. Elle est en outre percée parallèlement au fond de deux passages 24, latéraux et proches du fond, et d'un passage 25 centré entre les précédents et à l'opposé par rapport au fond. Les trous 22 et 23 reçoivent les fils de la jarretière. Les passages 24 et 25 reçoivent les extrémités intérieures des contacts, quand la partie mobile 1B est actionnée sur la partie fixe 1A vers la paroi arrière de cette dernière.

Cette portée 21 définit en outre une échancrure 27 dans le fond 5A, ainsi rendu en retrait sous la portée. Elle présente aussi deux rainures 28, réalisées dans l'échancrure sur l'extérieur des deux trous 22 et en regard des parties latérales extérieures des deux passages 24, en les ouvrant en correspondance partiellement sous la portée. L'échancrure 27 constitue une surface de guidage et d'encastrement des bords terminaux des deux demi-fonds 5A et 5B au niveau de leur jonction. Les rainures 28 reçoivent quant à elles les queues de liaison 4A, déjà raccordées aux contacts 2, s'y encastrant quand les extrémités intérieures des contacts se logent dans les passages prévus à leur effet dans la portée.

Cette portée 21 est moins large que le tiroir. Elle forme de part et d'autre deux rampes latérales 29, peu saillantes sur le fond et situées en regard des deux accès 19 de la paroi avant.

L'assemblage des deux parties 1A et 1B et le câblage de la jarretière se font par engagement de la portée 21 à l'avant des fentes 20 et de la paroi avant 7 à l'avant de l'entretoise 26, puis insertion des fils 10 et de l'éventuel écran de la jarretière dans les trous 22 et 23, et alors par poussée de la partie mobile 1B sur la partie fixe 1A, c'est-à-dire de la portée 21 sur les fentes 20 et de la paroi avant quasiment contre l'entretoise 26. Deux échancrures terminales 8C sur les parois latérales de part et d'autre de l'entretoise 26, et deux pattes correspondantes 7D saillantes sur l'intérieur de la paroi avant 7 contribuent au guidage d'assemblage.

La retenue de la partie mobile sur celle fixe est assurée par le pinçage des fils de la jarretière dans les fentes 20, avec leur raccordement aux contacts, et en outre par des doigts d'encliquetage tels que ceux prévus en regard l'un de l'autre en bout des pattes 7D et retenus bloqués sur l'arrière de l'entretoise 26.

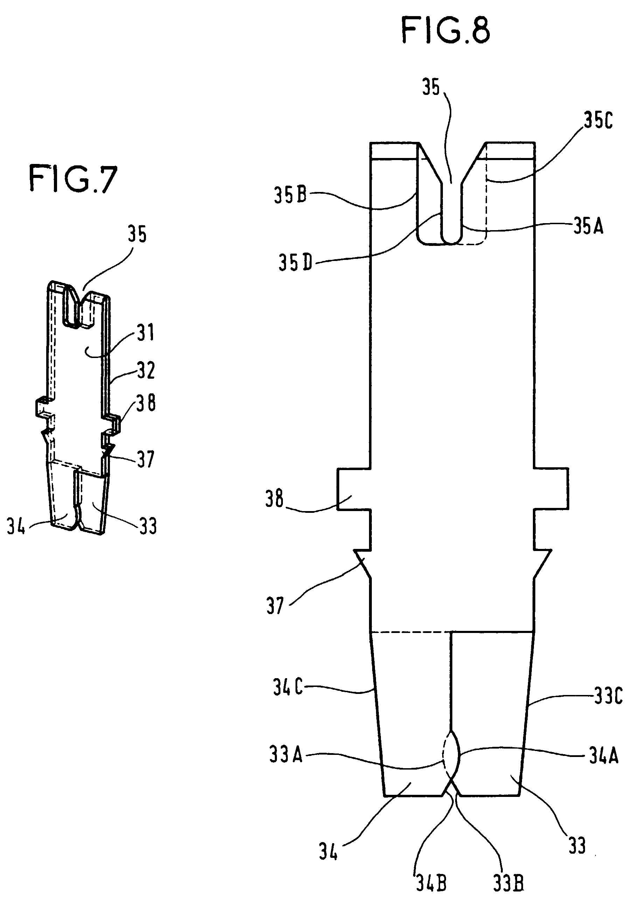

Les deux contacts 2 et le contact 3 sont identiques et décrits en regard des figures 7 et 8, représentant l'un d'eux, noté 2.

Ce contact est plat de forme rectangulaire et a l'une de ses extrémités de type hermaphrodite pour sa connexion à un autre contact identique. Il présente deux branches 31 et 32 accolées l'une à l'autre et est dit de ce fait contact double. Il est constitué par une lame plate, de longueur double de celle du contact, qui est découpée convenablement et pliée en deux sur elle-même.

Son extrémité de type hermaphrodite est constituée par deux bras élastiques 33 et 34, chacun défini par la partie terminale échancrée d'un côté de chacune des branches. Ces bras ont une largeur sensiblement moitié de celle des branches ou du contact. Ils s'étendent globalement l'un d'un côté de l'axe longitudinal du contact et l'autre de l'autre côté, en ayant leur bord dit interne correspondant à cet axe et en étant ainsi côte à côte sur la largeur du contact, mais avec un décalage l'un par rapport à l'autre donné par l'épaisseur de l'une des branches. Leur bord interne présente un bossage 33A, 34A, selon le bras, quasi-terminal et légèrement saillant sur l'axe longitudinal du contact, et un chanfrein terminal 33B, 34B, défini par le prolongement du flanc du bossage jusqu'à l'extrémité du bras, ainsi rendue en retrait sur cet axe. Leur bord opposé noté 33C, 34C est légèrement chanfreiné sur sa longueur.

Bien entendu des dispositions différentes peuvent être prévues sur cette extrémité de type hermaphrodite. Ce sont par exemple, sur le contact double, un bossage sur le bord interne de l'un de ses deux bras élastiques et une échancrure complémentaires sur celui de l'autre bras élastique, ou en variante sur un contact dit simple, ayant une seule branche et donc un seul bras élastique, un bossage et éventuellement une échancrure peu profonde ou plate à la suite du bossage, sur le bord interne de ce bras élastique unique.

On précise de l'élasticité que chaque bras dit élastique du contact est permise uniquement dans le plan du bras et obtenue, lors du montage du contact dans la paroi frontale arrière du tiroir, par le chanfrein sur le bord externe de ce bras.

Le contact comporte une fente autodénudante 35, sur son autre extrémité opposée. Cette fente est à ouverture en Vé et est centrée sur l'axe longitudinal du contact. Elle est définie avec son ouverture par une découpe dans la lame avant pliage. Elle est délimitée, avec son ouverture, après pliage de la lame, par deux bords opposés 35A et 35B, qui sont d'un côté et de l'autre de l'axe et appartiennent l'un à la partie de la découpe s'étendant dans l'une des branches et l'autre à la partie de la découpe s'étendant dans l'autre branche. Les deux autres bords de ces deux parties de la découpe dans les deux branches sont notés 35B et 35C. Ils sont en retrait sur les bords 35A et 35D.

Sur ce contact, deux dents latérales 37 et deux butées latérales 38, plus largement saillantes sur les dents, sont en outre prévues à la suite sur les bords longitudinaux du contact, pour sa retenue et son blocage dans la paroi frontale arrière du tiroir. Les dents sont relativement proches des bras élastiques et sont reçues dans des empreintes internes non représentées de la paroi frontale arrière du tiroir. Les butées sont à faible distance des dents et viennent en appui sur la face interne de cette même paroi.

Dans le connecteur de la figure 1, ces butées les plus extérieures sur les deux contacts 2 sont en regard des accès 19.

Dans ce même connecteur, on précise aussi que les deux varistances intégrées dans celui-ci permettent l'écoulement à la masse ramenée sur le contact 3 de surtensions parasites véhiculées sur les deux fils de la jarretière ou reçues de l'extérieur quand ce connecteur de jarretière est enfiché sur un autre connecteur.

En variante la partie mobile 1B peut présenter deux groupes de dents, parallèles et chacune percée par l'un des trous de réception des fils de la jarretière, qui coulissent dans les fentes de la partie fixe, pour celles de l'un des groupes disposées en une rangée en bout du demi-fond 5B, et coulissent sur les fourches autodénudantes des contacts, pour celles de l'autre groupe disposées à distance du fond. De telles dents correspondent à la portée précédente rendue évidée et quasiment réduite à ces deux groupes de dents. Des moyens de rétention des dents dans les fentes peuvent contribuer au maintien assemblé des deux parties 1A et 1B.

## Revendications

1. Connecteur de jarretière, comportant un corps isolant et des contacts plats affectés aux fils de la jarretière et retenus dans ledit corps, lesdits contacts ayant une première extrémité accessible frontalement sur ledit corps et étant munis d'une fourche autodénudante sur une deuxième extrémité opposée, de raccordement de l'un des fils sur chacun d'eux, caractérisé en ce que ledit corps est constitué par un boîtier quasi-fermé, formé par un tiroir (1) fermé par un couvercle (9) opposé à un fond (5), comportant :
- une première paroi frontale (6) , de rétention des contacts parallèlement audit fond et d'accès de la première extrémité de chacun d'eux,
- une portée intérieure (21), mobile relativement aux deuxièmes extrémités desdits contacts et équipée d'une part de passages individuels (24, 25) parallèles audit fond, de réception des deuxièmes extrémités des contacts (2, 3), et d'autre part de trous individuels (22, 23) coupant lesdits passages et débouchant sur ledit fond, de réception desdits fils,
- des fentes (20) à travers ledit fond, situées en regard et sensiblement le long des fourches autodénudantes (35) des contacts et ouvertes du côté opposé à ladite première paroi frontale, et
- des moyens d'actionnement (1B) de ladite portée, depuis une première position sensiblement en bout des ouvertures desdites fentes (20) et des deuxièmes extrémités des contacts et une deuxième position sur lesdites fentes et les deuxièmes extrémités des contacts.

2. Connecteur selon la revendication 1, caractérisé en ce qu'il comporte trois contacts identiques, montés côte à côte et à proximité dudit fond (5), pour deux premiers (2) d'entre eux, et monté centré sur lesdits premiers contacts et à proximité dudit couvercle (9), pour le troisième (3) dit contact de masse.

3. Connecteur selon la revendication 2, caractérisé en ce qu'il comporte en outre deux varistances (4) montées dans ledit tiroir (1) et reliées chacune entre l'un des premiers contacts (2) et le contact de masse (3).

4. Connecteur selon l'une des revendications 2 et 3, caractérisé en ce que ledit tiroir (1) est réalisé en deux parties assemblables l'une à l'autre, dites partie fixe et équipée (1A) pour l'une d'elles, à laquelle appartiennent au moins ladite première paroi frontale (6) et une portion attenante dudit fond dit premier demi-fond (5A) muni desdites fentes (20), ouvertes directement sur son bord terminal opposé à ladite première paroi frontale, et partie mobile (1B) pour l'autre constituant lesdits moyens d'actionnement et à laquelle appartiennent ladite portée (21) et au moins l'autre portion du fond dite deuxième demi-fond (5B).

5. Connecteur selon la revendication 4, caractérisé en ce que ladite portée (21) s'encastre sur lesdites fentes (20) ou s'encastre partiellement dans lesdites fentes (20).

6. Connecteur selon la revendication 4, caractérisé en ce que ladite portée (21) est saillante sur le deuxième demi-fond (5B) et présente une échancrure (27) rendant le deuxième demi-fond en retrait au niveau de ladite portée (21) et définissant une zone de jonction des premier et deuxième demi-fond (5A, 5B).

7. Connecteur selon la revendication 6, caractérisé en ce que ledit tiroir est à parois latérales (8) couplées par une entretoise (26), appartenant à ladite partie fixe (1A) et est à deuxième paroi frontale (7) opposée à la première, appartenant à ladite partie mobile.

8. Connecteur selon la revendication 7, caractérisé en ce qu'il comporte une poignée de préhension (18), saillante extérieurement sur ladite deuxième paroi frontale (7).

9. Connecteur selon la revendication 8, caractérisé en ce qu'il comporte deux accès de test (19), latéraux et proches dudit fond, à travers ladite deuxième paroi frontale (7).

10. Connecteur selon l'une des revendications 7 à 9, caractérisé en ce qu'il comporte une patte (16) terminée par une butée (17), toutes deux saillantes sous ledit fond, entre lesdites fentes (20) et ladite première paroi frontale (6).

11. Connecteur selon l'une des revendications 7 à 10, caractérisé en ce qu'il comporte des moyens de rétention (7D, 26) de ladite partie mobile (1B) assemblée sur ladite partie fixe (1A).

## Patentansprüche

1. Schaltadern-Verbinder mit einem Isolierkörper und Flachkontakten, die den Drähten der Schaltader zugeordnet sind und in dem Körper gehalten werden, wobei die Kontakte ein erstes, stirnseitig am Körper zugängliches Ende und ein zweites, mit einer die Isolierung durchschneidenden Gabel versehenes Ende zum Anschluß eines der Drähte an sie besitzen, dadurch gekennzeichnet, daß der Körper aus einem praktisch verschlossenen Gehäuse in Form eines Schiebers (1) besteht, der entgegengesetzt zu einem Boden (5) mit einem Deckel (9) verschlossen ist,
- mit einer ersten stirnseitigen Wand (6), die die Kontakte parallel zum Boden hält und Zugang zum ersten Ende jedes der Kontakte bietet,
- mit einer inneren Stützfläche (21), die bezüglich der zweiten Enden der Kontakte beweglich ist und einerseits mit individuellen Durchlässen (24, 25) parallel zum Boden zum Empfang der zweiten Enden der Kontakte (2, 3) versehen ist, und andererseits individuelle Löcher (22, 23) besitzt, die die Durchlässe schneiden und auf dem Boden münden sowie die Drähte aufnehmen,
- mit Schlitzen (20) durch den Boden, die in Höhe und im wesentlichen entlang der die Isolierung durchschneidenden Gabeln (35) der Kontakte angeordnet und an der von der ersten Stirnwand entfernten Seite offen sind,
- und mit Mitteln (1B) zur Verschiebung der Stützfläche ausgehend von einer ersten Stellung, in der sie sich im wesentlichen am Ende der Öffnungen der Schlitze (20) und der zweiten Enden der Kontakte befindet, und einer zweiten Stellung auf den Schlitzen und den zweiten Enden der Kontakte.

2. Verbinder nach Anspruch 1, dadurch gekennzeichnet, daß er drei identische Kontakte besitzt, von denen die beiden ersten (2) Seite an Seite in der Nähe des Bodens (5) verlaufen und von denen der dritte (3) als Massekontakt ausgebildet ist und zentriert zwischen den beiden ersten Kontakten in der Nähe des Deckels (9) verläuft.

3. Verbinder nach Anspruch 2, dadurch gekennzeichnet, daß er außerdem zwei Varistoren (4) besitzt, die in dem Schieber (1) montiert sind und je zwischen einen der ersten Kontakte (2) und den Massekontakt (3) eingefügt sind.

4. Verbinder nach einem der Ansprüche 2 und 3, dadurch gekennzeichnet, daß der Schieber (1) aus zwei zusammensteckbaren Teilen besteht, nämlich einem ortsfesten, bestückten Teil (1A), zu dem mindestens die erste Stirnwand (6) und eine anschließende erste Hälfte (5A) des Bodens mit den Schlitzen (20) gehören, die direkt an der der ersten Stirnwand abgewandten Endkante offen sind, während das bewegliche Teil (1B) die Betätigungsmittel bildet und die Stützfläche (21) sowie mindestens den zweiten Halbboden (5B) aufweist.

5. Verbinder nach Anspruch 4, dadurch gekennzeichnet, daß die Stützfläche (21) sich auf die Schlitze (20) schiebt oder teilweise eindringt.

6. Verbinder nach Anspruch 4, dadurch gekennzeichnet, daß die Stützfläche (21) über den zweiten Halbboden (5B) vorsteht und einen Ausschnitt (27) besitzt, der den zweiten Halbboden in Höhe der Stützfläche hintergreift und eine Verbindungszone zwischen dem ersten und dem zweiten Halbboden (5A, 5B) definiert.

7. Verbinder nach Anspruch 6, dadurch gekennzeichnet, daß der Schieber Seitenwände (8) besitzt, die über einen Steg (26) miteinander gekoppelt sind, der zum ortsfesten Teil (1A) gehört, und daß der Schieber eine der ersten Stirnwand entgegengesetzte zweite Stirnwand besitzt, die zum beweglichen Teil gehört.

8. Verbinder nach Anspruch 7, dadurch gekennzeichnet, daß er einen Griff (18) aufweist, der von der zweiten Stirnwand (7) vorsteht.

9. Verbinder nach Anspruch 8, dadurch gekennzeichnet, daß er zwei Testzugänge (19) seitlich und in der Nähe des Bodens durch die zweite Stirnwand (7) hindurch enthält.

10. Verbinder nach einem der Ansprüche 7 bis 9, dadurch gekennzeichnet, daß er eine in einem Anschlag (17) endende Lasche (16) besitzt, die über den Boden zwischen den Schlitzen (20) und der ersten Stirnwand (6) vorstehen.

11. Verbinder nach einem der Ansprüche 7 bis 10, dadurch gekennzeichnet, daß er Mittel (7D, 26) enthält, um das bewegliche Teil (1B) auf dem ortsfesten Teil (1A) festzuhalten.

## Claims

1. A jumper connector, comprising an insulating body and flat contacts for respective jumper wires and retained in said body, each of said contacts having a first end accessible at one end of said body and being provided at an opposite, second end with an insulation-displacement fork for connection to a respective wire, the connector being characterized in that said body is constituted by a quasi-closed box constituting a drawer (1) closed by a cover (9) opposite a bottom (5), and comprising:
• a first end wall (6) for retaining contacts parallel to said bottom and giving access to the first end of each contact;
• an internal pusher (21) movable relative to the second ends of said contacts and fitted both with individual passages (24, 25) parallel to said bottom for receiving the second ends of the contacts (2, 3), and with individual holes (22, 23) intersecting said passages and opening out to said bottom, for receiving said wires;
• slots (20) through said bottom, situated facing and substantially in line with the installation displacement forks (35) of the contacts and open at ends remote from said first end wall; and
• actuator means (1B) for actuating said pusher from a first position substantially at the ends of the openings of said slots (20) and of the second ends of the contacts, to a second position over said slots and said second ends of the contacts.

2. A connector according to claim 1, characterized in that it includes three identical contacts, comprising two first end walls (2) mounted side by side and close to said bottom (5), and a third end wall (3) constituting a ground contact mounted centrally relative to said first contacts and in the vicinity of said cover (9).

3. A connector according to claim 2, characterized in that it further includes two varistors (4) mounted in said drawer (1) and each connected between one of the first contacts (2) and the ground contact (3).

4. A connector according to claim 2 or 3, characterized in that said drawer (1) is made of two portions suitable for assembling to each other, one of them comprising a "fixed and fitted" portion (1A) including at least said first end wall (6) and an adjacent portion of the said bottom referred to as the first half-bottom (5A) which is provided with said slots (20) opening out directly in the end edge thereof remote from said first end wall, and the other comprising a "moving" portion (1B) constituting said actuator means and including said pusher (21) and at least the other portion of the bottom, referred to as the "second half-bottom" (5B).

5. A connector according to claim 4, characterized in that the pusher (21) engages in said slots (20) or engages partially in said slots (20).

6. A connector according to claim 4, characterized in that said pusher (21) projects from the second half-bottom (5B) and includes a notch (27) causing the second half-bottom to be set back at the level of said pusher (21), and defining a junction zone between the first and second half-bottoms (5A, 5B).

7. A connector according to claim 6, characterized in that said drawer has side walls (8) coupled together by a spacer (26) belonging to said fixed portion (1A), and has a second end wall (7) remote from the first and belonging to said moving portion.

8. A connector according to claim 7, characterized in that it includes a handle for grasping (18) projecting outwardly from said second end wall (7).

9. A connector according to claim 8, characterized in that it includes two test accesses (19) passing through said second end wall (7), on either side thereof and close to said bottom.

10. A connector according to any one of claims 7 to 9, characterized in that it includes a lug (16) terminated by an abutment (17), both projecting from beneath said bottom, between said slots (20) and said first end wall (6).

11. A connector according to any one of claims 7 to 10, characterized in that it includes means (7D, 26) for retaining said moving portion (1B) assembled onto said fixed portion (1A).
